# DEMANDE DE BREVET EUROPEEN

(11) **EP 2 653 909 A1**
(43) Date de publication de la demande: **23.10.2013**
(21) Numéro de dépôt: 13160974.5
(22) Date de dépôt: 26.03.2013
(51) Int. Cl.: G02F 1/13, B09B 3/00

(54) **Procédé et installation de recyclage d'écrans plats à cristaux liquides par découpe laser**

(30) Priorité: 18.04.2012 FR 1253549
(71) Demandeur: Envie 2E, 59810 Lesquin (FR)
(72) Inventeur: Doisy, Jean-Yves, 59184 Sainguin en Weppes (FR); Louage, Christophe, 59780 Camphin en Pevele (FR)
(74) Mandataire: Pronovem

(57) **Abrégé**

Le procédé permet le recyclage d'un écran plat (1) à cristaux liquides, comportant une dalle (10) à cristaux liquides enchâssée dans un châssis (11), une ou plusieurs couches (12a; 12b; 12c; 12d) de matériau plastique positionnées entre la face arrière de la dalle et le châssis, et des tubes d'éclairage (13) à vapeur de mercure. On positionne la face avant (10a) de la dalle (10) à cristaux liquides de l'écran plat sous une tête de découpe par laser; on réalise une première étape de découpe de la dalle (10) au moyen d'un faisceau laser suivant un contour de découpe fermé réalisé dans la partie centrale de la dalle (10) qui n'est pas couverte par le châssis, et de telle sorte qu'au moins une des couches de matériau plastique n'est pas découpée par le laser, puis on retire la partie centrale découpée de la dalle (10) à cristaux liquides. De préférence, une fois la partie centrale de la dalle (10) à cristaux liquides retirée, on réalise une deuxième étape de découpe, au moyen d'un faisceau laser (F), de la ou des couches de matériau plastique, qui n'ont pas été découpées au cours de la première étape de découpe par laser de la dalle, tout en préservant l'intégrité des tubes (13) à vapeur de mercure.

## Description

### Domaine technique

La présente invention concerne le domaine technique du recyclage d'écrans plats à cristaux liquides, de type écrans de télévision ou écrans d'ordinateur, plus communément appelés écrans LCD, et comportant une dalle d'affichage à cristaux liquides et des tubes d'éclairage à vapeur de mercure. Dans ce domaine technique, l'invention a pour objets un procédé et une installation de recyclage d'écrans plats à cristaux liquides mettant en oeuvre une découpe par laser.

### Art antérieur

Les écrans plat à cristaux liquides, communément appelés écrans LCD, fonctionnent tous sur le même principe de diffusion d'une source lumineuse au travers d'un filtre coloré masqué par des cristaux liquides. Il existe néanmoins deux grandes familles d'écrans plats à cristaux liquides : la famille des écrans de télévision et la famille des écrans d'ordinateur.

Un écran plat LCD de télévision comporte de manière usuelle une dalle d'affichage en verre qui contient des cristaux liquides enrobés dans de l'oxyde d'indium-étain (ITO), et qui est enchâssée dans un châssis, plusieurs couches de films plastiques diffuseurs de lumière, qui sont positionnées entre la face arrière de la dalle LCD et le fond du châssis, et des tubes d'éclairage à vapeur de mercure. Les tubes d'éclairage à vapeur de mercure sont disposés régulièrement entre le fond du châssis et les couches de films plastiques, et permettent un rétro-éclairage de la dalle LCD à travers lesdites couches de films plastiques.

Un écran plat LCD d'ordinateur comporte de manière usuelle une dalle d'affichage à cristaux liquides du même type que celle des écrans plats LCD de télévision, une plaque de diffusion transparente, en matériau thermoplastique, et le plus souvent en polyméthacrylate de méthyle (PMMA), qui est positionnée entre la face arrière de la dalle et le fond du châssis, et des tubes d'éclairage à vapeur de mercure. A la différence d'un écran plat LCD de télévision, dans un écran plat LCD d'ordinateur les tubes d'éclairage à vapeur de mercure sont disposés de part et d'autre de la plaque de diffusion, à proximité immédiate de deux bords opposés de la plaque de diffusion, de telle sorte que la lumière produite par les tubes d'éclairage est diffusée à travers la plaque. La dalle LCD est ainsi retro-éclairée de manière homogène au moyen de la plaque de diffusion combinée avec les tubes d'éclairage à vapeur de mercure.

Les tubes d'éclairage à vapeur de mercure comportent un tube en verre contenant un gaz de remplissage comprenant un gaz rare inerte et du mercure, et des électrodes de décharge permettant l'ionisation du gaz de remplissage. En cas de rupture du tube de verre, les vapeurs de mercure qui sont dégagées sont extrêmement nocives et susceptibles de provoquer des lésions cérébrales, rénales, cardiaques et pulmonaires. Les tubes d'éclairage à vapeur de mercure constituent donc une source de pollution nocive, qui complique les opérations de recyclage des écrans plats LCD.

On a déjà proposé à ce jour différentes solutions techniques de recyclage d'écrans plats LCD.

Une première solution de recyclage, décrite dans la demande de brevet français FR-A-2 943 263, consiste à découper l'écran LCD suivant un contour fermé tout en préservant l'intégrité de la dalle (ou matrice) LCD. Cette découpe peut être effectuée au moyen d'une scie circulaire ou au moyen d'un laser. Une fois la découpe effectuée, la dalle LCD est retirée. Cette solution technique présente plusieurs inconvénients. Elle n'est pas adaptée au recyclage d'écrans plats LCD d'ordinateurs, en particulier lorsqu'une découpe par laser est mise en oeuvre, car le contour fermé de découpe est positionné au droit des tubes d'éclairage à vapeur de mercure de l'écran plat LCD d'ordinateur, ce qui engendre, lors de la découpe de l'écran, un risque important de fracture des tubes à vapeur de mercure et de libération dans l'atmosphère des vapeurs de mercure nocives. En outre, lorsque cette solution technique est mise en oeuvre sur des écrans plats LCD de télévision, elle impose un positionnement extrêmement précis de l'outil de découpe (scie ou laser) par rapport à la dalle LCD. En effet, un mauvais positionnement de la découpe, pourrait conduire à briser les tubes d'éclairage à vapeur de mercure qui sont positionnés en face arrière de la dalle LCD, et à libérer accidentellement dans l'atmosphère des vapeurs de mercure nocives.

Une autre solution de recyclage, décrite notamment dans la demande de brevet allemand DE-A-102009020751, consiste à découper la dalle LCD suivant un contour fermé au moyen d'une scie circulaire. Lorsque cette solution technique est mise en oeuvre sur des écrans plats LCD d'ordinateur avec tubes d'éclairage à vapeur de mercure sur le côté, le contour fermé de découpe n'est pas positionné au droit desdits tubes d'éclairage à vapeur de mercure, ce qui à la différence de la première solution précitée permet d'éviter les risques de détérioration accidentelle des tubes d'éclairage à vapeur de mercure. En revanche, lorsque cette solution technique est mise en oeuvre sur des écrans plats LCD de télévision avec tubes d'éclairage à vapeur de mercure en face arrière, le contour fermé de découpe est positionné au droit des tubes d'éclairage à vapeur de mercure, et il y a un risque important de détérioration accidentelle de ces tubes lors de la découpe de la dalle LCD.

Dans la solution de recyclage décrite dans la demande de brevet allemand DE-A-102009020751, l'intégrité de la dalle LCD n'est pas préservée, mais la découpe de la dalle LCD permet néanmoins avantageusement de faciliter les opérations ultérieures de traitement et recyclage de la dalle LCD, notamment en facilitant l'opération d'ouverture de la dalle LCD en deux pour le traitement postérieur des verres de la dalle LCD.

### Objectif de l'invention

Un objectif de l'invention est de proposer une nouvelle solution technique de recyclage d'écrans plats LCD, comportant une opération de découpe de l'écran, qui peut avantageusement être réalisée aussi bien sur des écrans plats de télévision avec tubes d'éclairage à vapeur de mercure en face arrière de la dalle LCD, que sur des écrans plats d'ordinateur avec tubes d'éclairage à vapeur de mercure sur les cotés de la dalle LCD, avec un risque faible, et voire nul, de détérioration accidentelle des tubes d'éclairage à vapeur de mercure lors de la découpe.

### Résumé de l'invention

L'invention a ainsi pour premier objet un procédé de recyclage d'un écran plat à cristaux liquides, ledit écran plat à cristaux liquides comportant une dalle à cristaux liquides enchâssée dans un châssis, une ou plusieurs couches de matériau plastique positionnées entre la face arrière de la dalle et le châssis, et des tubes d'éclairage à vapeur de mercure. Ce procédé est **caractérisé en ce qu'**on positionne la face avant de la dalle (10) à cristaux liquides de l'écran plat sous une tête de découpe par laser ; on réalise une première étape de découpe de la dalle au moyen d'un faisceau laser (F) suivant un contour de découpe fermé réalisé dans la partie centrale de la dalle qui n'est pas couverte par le châssis, et de telle sorte qu'au moins une des couches de matériau plastique n'est pas découpée par le laser, puis on retire la partie centrale découpée de la dalle à cristaux liquides.

Plus particulièrement, dans une variante préférée de mise en oeuvre du procédé, une fois la partie centrale de la dalle à cristaux liquides retirée, on réalise une deuxième étape de découpe, au moyen d'un faisceau laser, de la ou des couches de matériau plastique, qui n'ont pas été découpées au cours de la première étape de découpe par laser de la dalle, tout en préservant l'intégrité des tubes à vapeur de mercure.

Plus particulièrement, mais de manière facultative selon l'invention, le procédé de recyclage de l'invention peut comporter les caractéristiques techniques additionnelles et optionnelles ci-après, prises isolément ou en combinaison :
- l'énergie délivrée par le faisceau laser de découpe au cours de la deuxième étape de découpe est inférieure à l'énergie délivrée par le faisceau laser de découpe (F) au cours de la première étape de découpe ;
- les tubes à vapeur de mercure sont positionnés en face arrière de la dalle ;
- l'écran comporte un ou plusieurs films plastiques superposés en guise de couches de matériau plastique ;
- l'écran comporte une plaque de diffusion en guise de couche de matériau plastique, et les tubes à vapeur de mercure sont positionnés de part et d'autre de la plaque de diffusion, à proximité immédiate de deux bords opposés de la plaque de diffusion ;
- la plaque de diffusion est en PMMA ;
- la longueur d'onde du faisceau laser est comprise entre 980nm et 11600nm ;
- le diamètre du faisceau laser à la sortie de la tête de découpe est compris entre environ 0,4mm et 0,7 mm, le waist du faisceau laser est compris entre environ 11mm et 15 mm, et la distance de découpe est comprise entre environ 185mm et 210mm ;
- pendant la première étape de découpe de la dalle LCD, la puissance du faisceau laser est comprise entre 300 W et 900 W, et la vitesse de découpe est comprise entre 13mm/s et 27mm/s ;
- pendant la deuxième étape de découpe, la puissance du faisceau laser est comprise entre 490W et 610W et la vitesse de découpe est comprise entre 47mm/s et 93mm/s, ou entre 13mm/s et 27mm/s.

L'invention a également pour autre objet une installation de recyclage d'écrans plats à cristaux liquides visée à la revendication 12 ou à la revendication 16.

Plus particulièrement, mais de manière facultative selon l'invention, l'installation de recyclage de l'invention peut comporter les caractéristiques techniques additionnelles et optionnelles ci-après, prises isolément ou en combinaison :
- l'équipement de découpe par laser est conçu pour régler l'énergie délivrée par le faisceau laser de découpe, de telle sorte que l'énergie délivrée par le faisceau laser de découpe cours de la deuxième étape de découpe est inférieure à l'énergie délivrée par le faisceau laser de découpe au cours de la première étape de découpe ;
- l'équipement de découpe par laser est conçu pour régler l'énergie délivrée par le faisceau laser de découpe, en réglant la puissance du faisceau laser de découpe et /ou la vitesse de découpe du faisceau laser ;
- la longueur d'onde du faisceau laser est comprise entre 980nm et 11600nm ;
- l'équipement de découpe par laser est conçupour effectuer une première étape de découpe avec une puissance du faisceau laser comprise entre 300W et 900W, et une vitesse de découpe comprise entre 13mm/s et 27mm/s, et pour effectuer au moins une deuxième étape de découpe avec une puissance du faisceau laser comprise entre 490 W et 610W et une vitesse de découpe comprise entre 47mm/s et 93mm/s, ou entre 13mm/s et 27mm/s ;
- le diamètre du faisceau laser à la sortie de la tête de découpe est compris entre environ 0,4mm et 0,7mm et le waist du faisceau laser est compris entre environ 11 mm et 15 mm.

### Brève description des figures

D'autre caractéristiques et avantages de l'invention apparaîtront plus clairement à la lecture de la description détaillée d'un exemple de procédé et d'installation de recyclage d'écrans plats LCD, laquelle description détaillée est faite à titre d'exemple non limitatif et non exhaustif de l'invention et en référence aux dessins annexés sur lesquels :
- la figure 1 est une vue de face d'un exemple d'écran plat LCD, de type écran de télévision ou écran d'ordinateur ;
- la figure 2 est une vue en coupe transversale schématique de l'écran de la figure 1 dans le plan de coupe II-II ;
- la figure 3 est une vue en coupe transversale schématique de l'écran de la figure 2, après première découpe laser et retrait de la dalle d'affichage LCD ;
- la figure 4 est une vue en coupe transversale schématique de l'écran de la figure 3, après deuxième découpe laser ;
- la figure 5 est un exemple d'équipement de découpe d'un écran plat LCD mettant en oeuvre un bras robotisé et un laser de découpe ;
- la figure 6 est une vue en coupe transversale schématique d'un écran plat LCD, de type écran d'ordinateur ;
- la figure 7 est une vue en coupe transversale schématique de l'écran de la figure 6, après première découpe laser et retrait de la dalle d'affichage LCD ;
- la figure 8 est une vue en coupe transversale schématique de l'écran de la figure 7, après deuxième découpe laser.

### Description détaillée

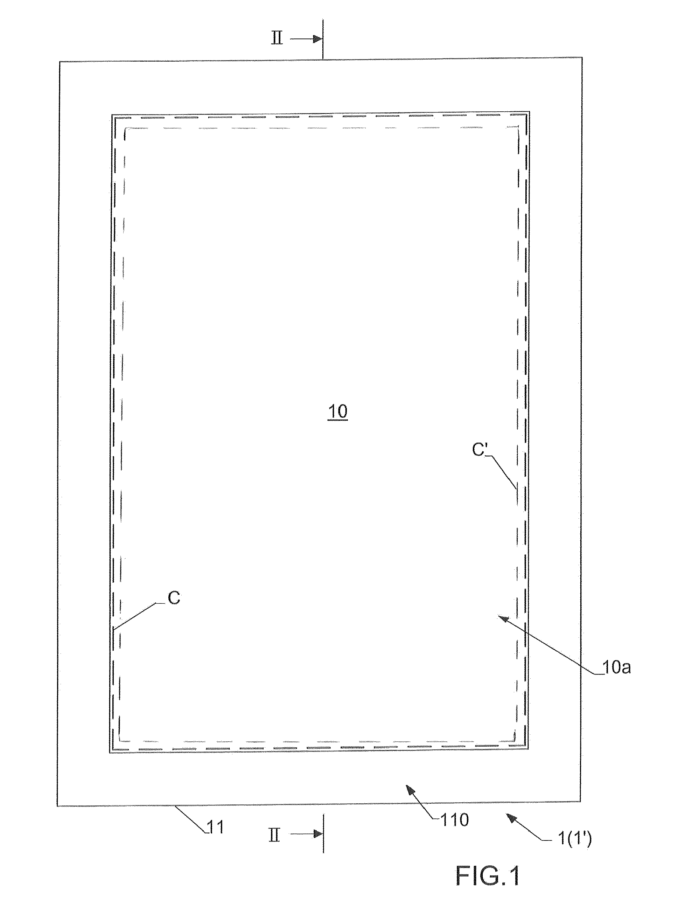

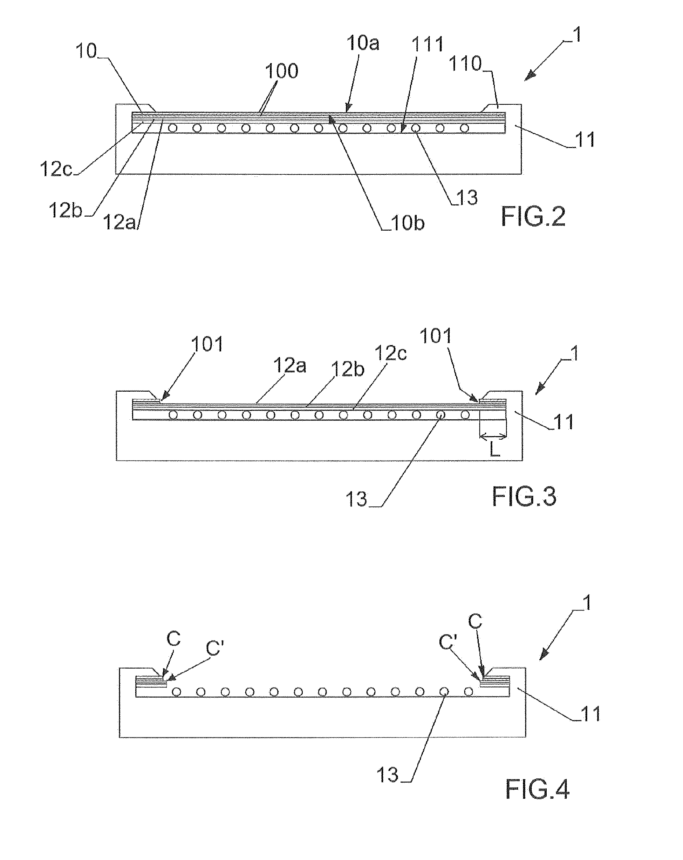

On a représenté de manière schématique sur les figures 1 et 2 un exemple d'écran plat 1 à cristaux liquides, de type écran de télévision, comportant une dalle d'affichage 10 à cristaux liquides, désignée également par la suite dalle LCD. Cette dalle LCD 10 comporte de manière usuelle deux plaques de verre 100 enserrant des cristaux liquides et un enrobage en oxyde d'indium-étain (ITO). La structure de la dalle LCD 10 est connue en soi et a été représentée de manière schématique et simplifiée sur les figures annexées.

Cette dalle LCD 10 est montée et fixée dans un châssis 11 qui peut être en une ou plusieurs parties, et qui est par exemple en plastique ou en métal.

Cette dalle LCD 10 est recouverte en face avant 10a, et sur toute sa périphérie, par un bord périphérique 110 du châssis 10. L'écran 1 comporte en outre entre le fond 111 du châssis 11 et la face arrière 10b de la dalle LCD 10 des tubes d'éclairage à vapeur de mercure 13 et plusieurs films plastiques superposés 12a, 12b, 12c permettant notamment de diffuser la lumière produite par les tubes d'éclairage à vapeur de mercure 13. Dans la variante particulière de réalisation de la figure 2, ces films plastiques sont au nombre de trois. Dans une autre variante de réalisation, le nombre de film plastiques diffuseurs pourrait être différent. Ces films plastiques 12a, 12b, 12c présentent des épaisseurs, qui peuvent être différentes, et qui en pratique peuvent varier par exemple du dixième de millimètre au millimètre. Ces films plastiques 12a, 12b,12c peuvent être de type monocouche ou multicouche et peuvent être constitués de matériaux plastiques divers, tels que par exemple du PET, PC (Polycarbonate), PMMA. Plus particulièrement ces films plastiques 12a, 12b,12c peuvent par exemple être de type monocouche en PET ou PMMA, ou être des films bicouches PC/PET, PMMA/PET, PMMA/PC.

Ces films 12a,12b,12c forment ainsi plusieurs couches fines de matériau plastique interposées entre la face arrière 10b de la dalle LCD 10 et les tubes d'éclairage à vapeur de mercure 13.

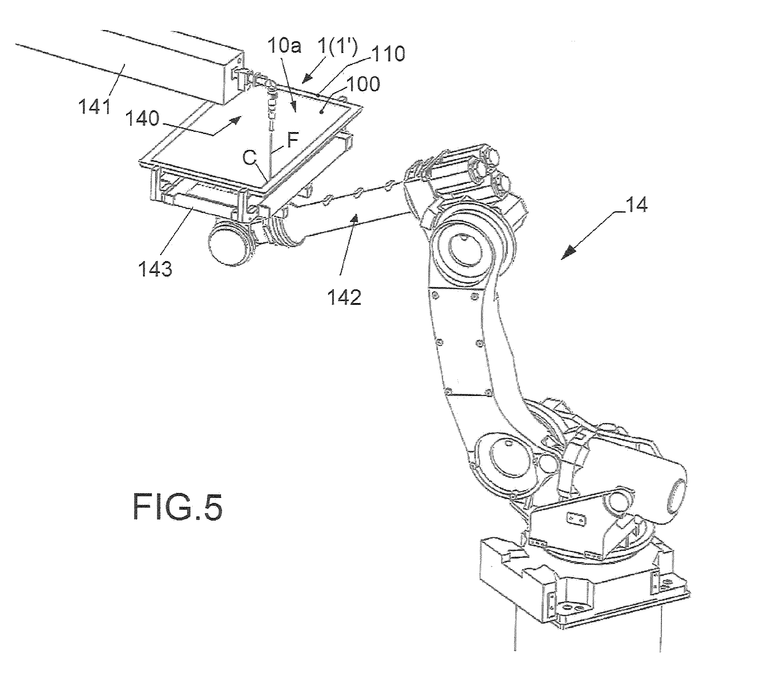

On a représenté sur la figure 5 un exemple d'équipement 14 permettant la découpe laser d'un écran 1 à cristaux liquides. Cet équipement de découpe par laser comporte :
- une tête de découpe par laser 140, qui est fixée à l'extrémité d'un bras fixe 140, et qui permet de générer un faisceau laser de découpe F orienté verticalement et de préférence de puissance réglable.
- Un support d'écran 143 fixé à l'extrémité d'un bras robotisé 142 ayant six degrés de liberté.

La découpe par laser d'un écran 1 à cristaux liquides est réalisée au moyen de cet équipement 14 de la manière suivante.

Un opérateur positionne manuellement et fixe l'écran 1 à cristaux liquides sur le support 143 de l'équipement 14, de telle sorte que la face avant 10a de la dalle LCD 10 est orientée vers le haut (figure 5).

Ensuite, l'opérateur actionne les moyens électroniques de commande (non représentés) de la tête de découpe par laser 140 et du bras robotisé 142 de manière à démarrer une première étape de découpe par laser.

Les moyens électroniques de commande de la tête de découpe par laser 140 et du bras robotisé 142 sont programmés de telle sorte, qu'au cours de cette première étape de découpe, le bras robotisé 142 positionne la face avant 10a de la dalle LCD 10 de l'écran 1 sous la tête de découpe par laser 140, et déplace automatiquement l'écran 1 par rapport au faisceau laser F produit par la tête de découpe 140, de manière à découper par laser la dalle LCD 10 suivant un contour de découpe fermé C (figure 1).

En référence à la figure 1, ce contour de découpe fermé C est réalisé dans la partie centrale de la dalle LCD 10 qui n'est pas enchâssée dans le châssis, et de préférence à proximité du bord périphérique 110 du châssis 11.

La puissance du faisceau laser F et la vitesse de déplacement de l'écran 1 par rapport à ce faisceau laser F sont réglées de telle sorte que seule la dalle LCD 10 est découpée au cours de cette première étape, les films plastiques sous-jacents 12a, 12b 12c n'étant pas découpés par le laser.

Dans une autre variante, la puissance du faisceau laser F et la vitesse de découpe (vitesse de déplacement de l'écran 1 par rapport à ce faisceau laser F) peuvent être réglées de telle sorte que la dalle LCD 10 et les films 12a, 12b les plus proches de la dalle LCD 10 sont découpés au cours de cette première étape, et au moins un 12c des films le plus éloigné de la dalle 10 n'est pas découpé par le faisceau laser.

Quelle que soit la variante susvisée, il en résulte avantageusement que les tubes d'éclairage à vapeur de mercure 13 ne sont pas détruits par le faisceau laser F, et que leur intégrité est préservée.

Il revient à l'homme du métier de régler judicieusement la puissance du faisceau laser F et la vitesse de découpe (vitesse de déplacement de l'écran 1 par rapport à ce faisceau laser F) pour réaliser cette première étape de découpe.

A titre d'exemple indicatif et non limitatif de l'invention, dans un exemple précis de réalisation, pour réaliser la première étape de découpe, la longueur d'onde du faisceau laser F était comprise entre 980nm et 11600nm ; le diamètre du faisceau laser F à la sortie de la tête de découpe était compris entre environ 0,4mm et 0,7mm ; le waist du faisceau laser F était compris entre environ 11mm et 15 mm ; au cours de la découpe, la distance de découpe, c'est-à-dire la distance verticale entre la face avant 10a de la dalle LCD 10 et la sortie de la tête de découpe 140, était comprise entre environ 185mm et 210 mm ; la puissance du faisceau laser F était comprise entre 300W et 900W ; la vitesse de découpe (vitesse de déplacement de l'écran 1 par rapport au faisceau laser F) était comprise entre 13mm/s et 27mm/s.

En référence à la figure 3, une fois la première étape de découpe par laser réalisée, l'opérateur retire la partie centrale découpée de la dalle LCD 10, et il subsiste uniquement un cadre 101 de dalle 10 de faible largeur L fixé au châssis 11.

La partie centrale de la dalle 10 qui est retirée est envoyée dans une chaîne de traitement et de recyclage, dans laquelle les deux plaques de verres 100 de la dalle sont facilement séparées l'une de l'autre, et sont traitées pour la séparation des composés pris en sandwich entre les deux plaques 100, dont notamment les cristaux liquides et l'oxyde d'indium-étain (ITO).

Une fois la partie centrale de la dalle 10 retirée de l'écran 1, l'opérateur actionne les moyens électroniques de commande de la tête de découpe par laser 140 et du bras robotisé 142, de manière à démarrer une deuxième étape de découpe par laser.

Les moyens électroniques de commande de la tête de découpe par laser 140 et du bras robotisé 142 sont programmés de telle sorte, qu'au cours de cette deuxième étape de découpe, le bras robotisé 142 positionne et déplace automatiquement l'écran 1 par rapport au faisceau laser F produit par la tête de découpe par laser 140, de manière à découper par laser suivant un contour fermé C' (figure 4) le ou les films plastiques 12a, 12b,12c, qui n'ont pas été découpés au cours de la première étape de découpe par laser de la dalle 10, tout en préservant l'intégrité des tubes à vapeur de mercure 13. Ce contour de découpe fermé C' est situé à l'intérieur du premier contour de découpe C de la première étape, et de préférence à proximité de ce premier contour de découpe C.

La puissance du faisceau laser F et la vitesse de découpe (vitesse de déplacement de l'écran 1 par rapport à ce faisceau laser F) sont réglées de telle sorte que l'énergie délivrée par ce faisceau laser est suffisamment forte pour découper les films plastiques 12a, 12b 12c, mais est suffisamment faible pour que le faisceau laser de découpe F ne détruise pas les tubes à vapeur de mercure 13, l'intégrité des tubes à vapeur de mercure 13 étant ainsi avantageusement préservée.

Il revient à l'homme du métier de régler judicieusement la puissance du faisceau laser F et la vitesse de découpe (vitesse de déplacement de l'écran 1par rapport à ce faisceau laser F) pour réaliser cette deuxième étape de découpe.

En pratique, pour réaliser cette deuxième étape de découpe, la puissance du faisceau laser F et la vitesse de déplacement de l'écran 1 seront réglées, de telle sorte que l'énergie délivrée par le faisceau laser L est inférieure à l'énergie délivrée par le faisceau laser lors de la première étape.

Selon le cas, la vitesse de découpe (vitesse de déplacement de l'écran 1 par rapport à ce faisceau laser F) au cours de la deuxième étape peut par exemple être supérieure à la vitesse de découpe au cours de la première étape, la puissance du faisceau laser n'étant pas modifiée entre les deux étapes de découpe, ou la puissance du faisceau laser F au cours de la deuxième étape peut par exemple être inférieure à la puissance du laser au cours de la première étape, la vitesse de coupe n'étant pas modifiées entre les deux étapes de découpe.

Egalement, dans une autre variante, les deux paramètres (vitesse de coupe et puissance) peuvent être modifiés par rapport à la première étape de découpe pour réaliser la deuxième étape de découpe.

A titre d'exemple indicatif et non limitatif de l'invention, dans un exemple précis de réalisation, pour réaliser la deuxième étape de découpe, la longueur d'onde du faisceau laser F était compris entre 980nm et 11600nm ; le diamètre du faisceau laser F à la sortie de la tête de découpe était compris entre environ 0,4mm et 0,7mm ; le waist du faisceau laser F était compris entre environ 11 mm et 15mm ; au cours de la découpe, la distance de découpe, c'est-à-dire la distance verticale entre le film 12a et la sortie de la tête de découpe 140, était comprise entre environ 185mm et 210mm ; la puissance du faisceau laser F était comprise entre 490W et 610W ; la vitesse de découpe (vitesse de déplacement de l'écran 1 par rapport au faisceau laser F) était comprise entre 47mm/s et 93mm/s.

En référence à la figure 4, une fois la deuxième étape de découpe par laser réalisée, l'opérateur retire la partie centrale découpée des films 12a, 12, 12c, qui peuvent ainsi être recyclés séparément.

Dans une autre variante de réalisation, la découpe laser des films plastiques 12a,12b,12c pourrait être réalisée en plusieurs étapes de découpes successives.

La partie restante de l'écran (figure 4) est ensuite acheminée dans une chaîne de traitement et de recyclage, dans laquelle notamment les tubes d'éclairage à vapeur de mercure 13, qui sont à présent découverts et plus facilement accessibles, sont retirés et/ou briser in situ sous atmosphère contrôlée avec aspiration des vapeurs de mercure.

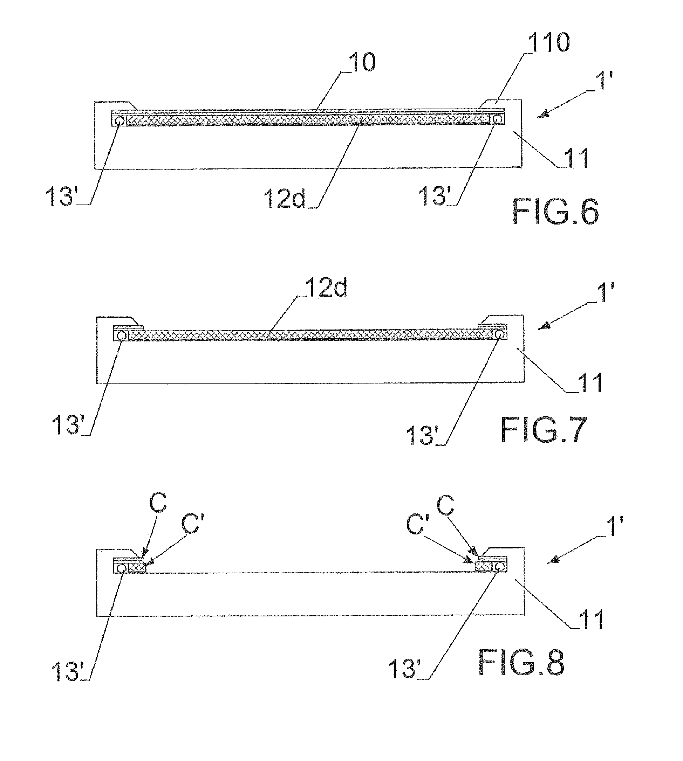

On a représenté de manière schématique en coupe transversale sur la figure 6 un exemple d'écran plat 1' à cristaux liquides, de type écran d'ordinateur. A la différence de l'écran plat 1 précédemment décrit, cet écran plat 1' comporte :
- en face arrière de la dalle LCD 10, une plaque de diffusion 12d en matériau thermoplastique, par exemple en polyméthacrylate de méthyle (PMMA) ; en pratique l'épaisseur de cette plaque 12d peut varier de quelques millimètres au centimètre ;
- des tubes d'éclairage à vapeur de mercure 13' qui sont fixés dans le châssis 11, en étant disposés de part et d'autre de la plaque de diffusion 12d, à proximité immédiate de deux bords opposés de la plaque de diffusion, de telle sorte que la lumière produite par les tubes d'éclairage 13' est diffusée à travers l'épaisseur de la plaque 12d.

L'équipement 14 de la figure 5 peut également être utilisé pour réaliser la découpe par laser d'un écran 1' à cristaux liquides du type de celui de la figure 6, de manière comparable à ce qui a été précédemment décrit et en mettant notamment en oeuvre deux étapes de découpe par laser.

La première étape de découpe par laser de la dalle LCD 10 est identique à celle précédemment décrite pour l'écran 1. Une fois la partie centrale de la dalle LCD 10 découpée et retirée (figure 7), on réalise une deuxième étape de découpe par laser de la plaque de diffusion 12d et on retire la partie centrale découpée de la plaque de diffusion 12d (figure 8).

Sachant que dans cette configuration d'écran plat 1', les tubes 13' à vapeur de mercure ne sont pas situés en face arrière de la dalle LCD 10, lors des opérations de découpe par laser, le faisceau laser F ne peut pas atteindre les tubes 13' ; l'intégrité des tubes 13' est donc avantageusement préservée pendant les opérations de découpe par laser.

La puissance du faisceau laser F et la vitesse de découpe (vitesse de déplacement de l'écran 1 par rapport à ce faisceau laser F) sont réglées de telle sorte que l'énergie délivrée par ce faisceau laser est suffisamment forte pour découper la plaque de diffusion 12d. En pratique, l'énergie nécessaire pour découper la plaque de diffusion 12d est supérieure à celle utilisée pour découper les films plastiques précités 12a,12b,12c, ce qui se traduit par la mise en oeuvre d'une vitesse de découpe de la plaque 12d plus lente et/ou une puissance de faisceau laser F pus importante.

A titre d'exemple indicatif et non limitatif de l'invention, dans un exemple précis de réalisation, pour réaliser la deuxième étape de découpe de la plaque de diffusion 12d, la longueur d'onde du faisceau laser F était comprise entre 980nm et 10600nm ; le diamètre du faisceau laser F à la sortie de la tête de découpe était compris entre environ 0,4mm et 0,7mm ; le waist du faisceau laser F était compris entre environ 11 mm et 15mm ; au cours de la découpe, la distance de découpe, c'est-à-dire la distance verticale entre la face avant de la plaque 12d et la sortie de la tête de découpe 140, était comprise entre environ 185mm à 210mm ; la puissance du faisceau laser F était comprise entre 490W et 610W ; la vitesse de découpe (vitesse de déplacement de l'écran 1 par rapport au faisceau laser F) était comprise entre 13mm/s et 27mm/s.

L'invention n'est pas limitée à l'utilisation d'un équipement avec bras robotisé, tel que celui de la figure 5, pour la mise en oeuvre des opérations de découpe par laser d'un écran plat LCD 1 ou 1'. Par exemple, dans une autre variante de réalisation, les deux étapes de découpe par laser d'un écran plat LCD 1 ou 1' peuvent être réalisées en positionnant à plat et en immobilisant l'écran LCD 1 ou 1' sur un support, tel que par exemple un convoyeur à rouleaux, puis en déplaçant une tête de découpe par laser mobile par rapport à l'écran 1 ou 1' de manière à réaliser les étapes successives de découpe par laser précédemment décrites.

## Revendications

1. Procédé de recyclage d'un écran plat (1 ; 1') à cristaux liquides, ledit écran plat à cristaux liquides comportant une dalle (10) à cristaux liquides enchâssée dans un châssis (11), une ou plusieurs couches (12a ; 12b ; 12c ; 12d) de matériau plastique positionnées entre la face arrière de la dalle et le châssis, et des tubes d'éclairage (13 ; 13') à vapeur de mercure, **caractérisé en ce qu'**on positionne la face avant (10a) de la dalle (10) à cristaux liquides de l'écran plat sous une tête de découpe par laser (140), **en ce qu'**on réalise une première étape de découpe de la dalle (10) au moyen d'un faisceau laser (F) suivant un contour de découpe fermé (C) réalisé dans la partie centrale de la dalle (10) qui n'est pas couverte par le châssis, et de telle sorte qu'au moins une des couches de matériau plastique n'est pas découpée par le laser, puis on retire la partie centrale découpée de la dalle (10) à cristaux liquides.

2. Procédé selon la revendication 1, **caractérisé en ce qu'**une fois la partie centrale de la dalle (10) à cristaux liquides retirée, on réalise une deuxième étape de découpe, au moyen d'un faisceau laser (F), de la ou des couches de matériau plastique, qui n'ont pas été découpées au cours de la première étape de découpe par laser de la dalle, tout en préservant l'intégrité des tubes (13 ; 13') à vapeur de mercure.

3. Procédé selon la revendication 2, dans lequel l'énergie délivrée par le faisceau laser de découpe (F) au cours de la deuxième étape de découpe est inférieure à l'énergie délivrée par le faisceau laser de découpe (F) au cours de la première étape de découpe.

4. Procédé selon l'une quelconque des revendications 1 à 3, dans lequel pendant la deuxième étape de découpe, la puissance du faisceau laser (F) est comprise entre 490W et 610W et la vitesse de découpe est comprise entre 47mm/s et 93mm/s, ou entre 13mm/s et 27mm/s.

5. Procédé selon l'une quelconque des revendications 1 à 4, dans lequel les tubes (13) à vapeur de mercure sont positionnés en face arrière de la dalle (10).

6. Procédé selon la revendication 5, dans lequel l'écran (1) comporte un ou plusieurs films plastiques (12a, 12b, 12c) superposés en guise de couches de matériau plastique.

7. Procédé selon l'une quelconque des revendications 1 à 4, dans lequel l'écran (1') comporte une plaque de diffusion (12d) en guise de couche de matériau plastique, et les tubes (13') à vapeur de mercure sont positionnés de part et d'autre de la plaque de diffusion (12d), à proximité immédiate de deux bords opposés de la plaque de diffusion (12d).

8. Procédé selon la revendication 7, dans lequel la plaque de diffusion (12d) est en PMMA.

9. Procédé selon l'une quelconque des revendications 1 à 8, dans lequel la longueur d'onde du faisceau laser (F) est comprise entre 980nm et 11600nm.

10. Procédé selon l'une quelconque des revendications 1 à 9, dans lequel le diamètre du faisceau laser (F) à la sortie de la tête de découpe (140) est compris entre environ 0,4mm et 0,7mm, le waist du faisceau laser (F) est compris entre environ 11 mm et 15 mm, et la distance de découpe est comprise entre environ 185mm et 210mm.

11. Procédé selon l'une quelconque des revendications 1 à 10, dans lequel pendant la première étape de découpe de la dalle LCD (10), la puissance du faisceau laser (F) est comprise entre 300W et 900W, et la vitesse de découpe est comprise entre 13mm/s et 27 mm/s.

12. Installation de recyclage d'écrans plats (1 ; 1') à cristaux liquides comportant un équipement (14) de découpe par laser qui est apte à délivrer un faisceau laser de découpe (F), et qui est conçu pour réaliser une découpe laser d'un écran plat (1 ; 1') en au moins deux étapes successives.

13. Installation selon la revendication 12, **caractérisée en ce que** l'équipement (14) de découpe par laser est conçu pour effectuer une première étape de découpe avec une puissance du faisceau laser (F) comprise entre 300W et 900W, et une vitesse de découpe comprise entre 13mm/s et 27mm/s, et pour effectuer au moins une deuxième étape de découpe avec une puissance du faisceau laser (F) comprise entre 490W et 610W et une vitesse de découpe comprise entre 47mm/s et 93mm/s, ou entre 13mm/s et 27mm/s.

14. Installation selon l'une quelconque des revendications 12 ou 13, dans laquelle l'équipement (14) de découpe par laser est conçu pour régler l'énergie délivrée par le faisceau laser de découpe (F), de telle sorte que l'énergie délivrée par le faisceau laser de découpe cours de la deuxième étape de découpe (F) est inférieure à l'énergie délivrée par le faisceau laser de découpe (F) au cours de la première étape de découpe.

15. Installation selon l'une quelconque des revendications 12 à 14, pour le de recyclage d'écrans plats (1 ; 1') à cristaux liquides comportant une dalle (10) à cristaux liquides enchâssée dans un châssis (11), une ou plusieurs couches (12a ; 12b ; 12c ; 12d) de matériau plastique positionnées entre la face arrière de la dalle et le châssis, et des tubes d'éclairage (13 ; 13') à vapeur de mercure, dans laquelle la première étape de découpe laser est conçue pour réaliser une découpe de la dalle (10) au moyen d'un faisceau laser (F) suivant un contour de découpe fermé (C) réalisé dans la partie centrale de la dalle (10) qui n'est pas couverte par le châssis, et de telle sorte qu'au moins une des couches de matériau plastique n'est pas découpée par le laser, et dans laquelle la deuxième étape de découpe laser est conçue pour réaliser une découpe au moyen d'un faisceau laser (F), de la ou des couches de matériau plastique, qui n'ont pas été découpées au cours de la première étape de découpe par laser de la dalle, tout en préservant l'intégrité des tubes (13 ; 13') à vapeur de mercure.

16. Installation pour le de recyclage d'au moins un écran plat (1 ; 1') à cristaux liquides comportant une dalle (10) à cristaux liquides enchâssée dans un châssis (11), une ou plusieurs couches (12a ; 12b ; 12c ; 12d) de matériau plastique positionnées entre la face arrière de la dalle et le châssis, et des tubes d'éclairage (13 ; 13') à vapeur de mercure, ladite installation comportant un équipement (14) de découpe par laser qui est apte à délivrer un faisceau laser de découpe (F), et qui est conçu pour réaliser une première étape de découpe de la dalle (10) au moyen dudit faisceau laser de découpe (F) suivant un contour de découpe fermé (C) réalisé dans la partie centrale de la dalle (10) qui n'est pas couverte par le châssis, et de telle sorte qu'au moins une des couches de matériau plastique n'est pas découpée par le laser.

17. Installation selon la revendication 16, dans laquelle l'équipement (14) de découpe par laser est conçu pour réaliser une deuxième étape de découpe, au moyen dudit faisceau laser de découpe (F), de la ou des couches de matériau plastique, qui n'ont pas été découpées au cours de la première étape de découpe par laser de la dalle.

18. Installation selon la revendication 17, **caractérisée en ce que** l'équipement (14) de découpe par laser est conçu pour effectuer ladite deuxième étape de découpe avec une puissance du faisceau laser (F) comprise entre 490W et 610W et une vitesse de découpe comprise entre 47mm/s et 93mm/s, ou entre 13mm/s et 27mm/s.

19. Installation selon l'une quelconque des revendications 17 ou 18, dans laquelle l'équipement (14) de découpe par laser est conçu pour régler l'énergie délivrée par le faisceau laser de découpe (F), de telle sorte que l'énergie délivrée par le faisceau laser de découpe cours de la deuxième étape de découpe (F) est inférieure à l'énergie délivrée par le faisceau laser de découpe (F) au cours de la première étape de découpe.

20. Installation selon l'une quelconque des revendications 16 à 19 **caractérisée en ce que** l'équipement (14) de découpe par laser est conçu pour effectuer la première étape de découpe avec une puissance du faisceau laser (F) comprise entre 300W et 900W, et une vitesse de découpe comprise entre 13mm/s et 27mm/s.

21. Installation selon l'une quelconque des revendications 12 à 20, dans laquelle l'équipement (14) de découpe par laser est conçu pour régler l'énergie délivrée par le faisceau laser de découpe, en réglant la puissance du faisceau laser de découpe (F) et /ou la vitesse de découpe du faisceau laser (F).

22. Installation selon l'une quelconque des revendications 12 à 21, dans laquelle la longueur d'onde du faisceau laser (F) est comprise entre 980nm et 11600nm.

23. Installation selon l'une quelconque des revendications 12 à 22, laquelle le diamètre du faisceau laser (F) à la sortie de la tête de découpe (140) est compris entre environ 0,4mm et 0,7mm, et le waist du faisceau laser (F) est compris entre environ 11 mm et 15mm.
